# EUROPEAN PATENT APPLICATION

(11) **EP 0 594 158 A1**
(43) Date of publication of application: **27.04.1994**
(21) Application number: 93117000.5
(22) Date of filing: 20.10.1993
(51) Int. Cl.: A01G 31/02

(54) **Hydroponic apparatus**

(30) Priority: 22.10.1992 JP 309235/92; 16.03.1993 JP 82633/93; 24.06.1993 JP 180635/93
(71) Applicant: Yanohara, Yoshitami, Osaka-shi, Osaka-fu (JP)
(72) Inventor: Yanohara, Yoshitami, Osaka-shi, Osaka-fu (JP)
(74) Representative: Schoppe, Fritz, Dipl.-Ing.

(57) **Abstract**

A hydroponic apparatus (10) comprising a bed (22) and planting panels (24) above the bed for holding what is planted with seedlings of a plant and a culture solution is fed into each bed so that the tip of the roots of the plant growing in the planting panels is soaked therein and a wave-making part (36) for making waves in the surface of the culture solution within the bed. The wave-making part (36) comprises shaft (38) disposed around the center of the bed to rotate freely, a drive means such as a motor (46) for rotating the shaft, a converting means such as a crank member (58) connected with the shaft so that the rotating force of the shaft is converted into reciprocating linear motion, a working member (68) driven vertically by means of the converting means, a supporting member (78) disposed above the bed and secured to the working member and a supporting plate fixed to the securing member and wave-making plates (80) secured to the supporting member and disposed at a distance from the surface of the culture solution L in the bed which beat the surface of the culture solution L in the bed to make waves.

## Description

### BACKGROUND OF THE INVENTION

### Field of the invention:

The present invention relates to a hydroponic apparatus for green vegetables such as lettuce, spinach, Brassica Rapavar. Pervids (a scientific name), "chingensai" (chinese cabbage), and honeywort.

### Description of the Prior Art:

As a conventional hydroponic apparatus may be cited, among others, one using a circulating pump. In this hydroponic apparatus of the circulating pump water pumped from a water source is stored in a tank and fertilizer salts et cetera are dissolved therein for preparation of a culture solution. And this prepared culture solution is pumped through a pipe into the bed. In this case a given amount of culture solution is drained into the tank after overflowing thorough a drain hole and by subsequent natural falling through the drain pipe. This hydroponic apparatus has many alternative aeration systems for supplying a large amount of oxygen to the culture solution circulation route such as aerator, sprayer and natural falling system.

With such hydroponic apparatus, however, a large size tank and a high power pump are required for storing the culture solution and also for circulating it and, moreover, various complicated apparatuses are required for supplying oxygen into the culture solution, this resulting in a large initial investment and a high running cost. Worse, the many alternative aeration systems provided for the conventional hydroponic apparatus failed to have the required amount of oxygen dissolved into the culture solution and, therefore, failed to supply thereto an enough amount of oxygen.

Furthermore, with such conventional hydroponic apparatus the temperature of the culture solution rises in summer with rising atmospheric temperature. Hence, when a green vegetable such as spinach whose growing temperature is relatively low has to be cultured in mid summer a blower or an air conditioning equipment such as a cooler is necessary for properly lowering the temperature in the culture house, this resulting in further rise of the initial cost as well as running cost.

Worse, with such a conventional hydroponic apparatus the roots of a plant soaked in the culture solution in the bed are nearly still-standing, hence gas-exchange between carbon dioxide and hydrogen is poor, this meaning poor activation of the plant's photosynthesis. That is, with such a hydroponic apparatus it was difficult to create in the bed environmental conditions suited for plant growth.

### SUMMARY OF THE INVENTION

The main object of the present invention is to provide a hydroponic apparatus which enables provision of environmental conditions suited for plant growth at a low cost with further possibility of preventing rise in temperature of the culture solution even in mid summer.

The present invention relates to a hydroponic apparatus comprising a bed and a planting panel for holding what has been planted with seedlings of a plant with the bed being filled with a culture solution so that the tip of the growing roots held by the planting panel soaked therein, and also a wave-making part for making waves in the bed by waving the culture solution in the bed.

The wave-making part moves the culture solution in the bed to make waves therein, that is, in the surface of the culture solution in the bed.

According to the present invention, air is continuously involved in the interface layer of the culture solution so that oxygen in the air is dissolved to result in an increased amount of oxygen in the culture solution. Waving of the culture solution also results in an increased surface area thereof and an increased quantity of heat of vaporization, which prevents rise of temperature of the culture solution in the bed due to rise of atmospheric temperature even in mid summer. This enables easy culture of, for example, spinach which has been taken as not good for culture in summer.

Further, since the present invention makes waves in the surface of the culture solution and the plant's roots are moved continuously thereby, gas exchange between carbon dioxide and oxygen is improved and the plant's photosynthesis, too, is activated. Since the plant as a whole, that is, not only the root (underground) part but also the aboveground part, is moved, photosynthesis is activated and growth of the plant is accelerated. Moreover, waving of the culture solution results in stirring thereof, and this means uniformize of the nutrients in the culture solution. Hence the plant and microbes symbiotic relation therewith are activated through ample supply of oxygen and nutrients and the plant's growth is enhanced thereby.

Also, since the plant as a whole is moved as the culture solution is waved, the plant is less subject to damage from insects such as aphides.

According to the present invention, unlike the conventional hydroponic apparatus, complicated apparatus such as a large tank for storage of culture solution, a large and high-power pump for circulation of the culture solution, an aerator for supplying oxygen into the culture solution and sprayer may be dispensed with as well as an air conditioner such as a cooler and blower. Hence, the hydroponic apparatus of the present invention is cheaper in both initial cost and running cost.

Thus, the hydroponic apparatus of the present invention enables creation of environmental conditions suited for growth of the plant simply and at a low cost as well as prevention of rise of the temperature of the culture solution even in mid-summer.

The aforementioned objects, other objects, features, phases and advantages of the present invention will become more apparent from the detailed description of of embodiments with reference to the annexed drawings.

### BRIEF DESCRIPTION OF THE DRAWINGS

Fig. 1 is a perspective view of the essential parts showing an embodiment of the present invention.

Fig. 2 is a schematic elevational view showing the whole of an embodiment of the present invention.

Fig. 3 is a schematic plan view showing the whole of an embodiment of the present invention.

Fig. 4 is a schematic side view showing the whole of an embodiment of the present invention.

Fig. 5 is a sectional illustrative view showing the mounting state of the planting panel.

Fig. 6 is a schematic elevational view of the essential parts showing the wave-making mechanism of the hydroponic apparatus of Fig. 1, Fig. 2, Fig. 3 and Fig. 4.

Fig. 7 is a schematic plan view of the essential parts showing the wave-making mechanism of the hydroponic apparatus of Fig. 1, Fig. 2, Fig. 3 and Fig. 4.

Fig. 8 is a schematic side view of the essential parts showing the wave-making mechanism of the hydroponic apparatus of Fig. 1, Fig. 2, Fig. 3 and Fig. 4.

Fig. 9 is an illustrative view showing the way the culture solution is waved by the wave-making mechanism of Fig. 6, Fig. 7 and Fig. 8.

Fig. 10 is a perspective view showing another embodiment of the present invention.

Fig. 11 is a sectional view taken along the line XI-XI in Fig. 10.

Fig. 12 is a sectional end view taken along the line XII-XII in Fig. 10.

Fig. 13 is an illustrative view of the essential parts showing the wave-making mechanism of the hydroponic apparatus shown in Fig. 10, Fig. 11 and Fig. 12.

Fig. 14 is an illustrative view showing a variation of the hydroponic apparatus shown in Fig. 10, Fig. 11, Fig. 12 and Fig. 13.

Fig. 15 is an illustrative view showing another variation of the hydroponic apparatus shown in Fig. 10, Fig. 11, Fig. 12 and Fig. 13.

Fig. 16 is an illustrative view of the essential parts showing still another embodiment of the present invention.

Fig. 17 is an illustrative view showing the essential parts of the wave-making part of Fig. 16.

Fig. 18 is an illustrative view of the essential parts showing a variation of the hydroponic apparatus of Fig. 15.

Fig. 19 is an illustrative view of the essential parts showing still a further another embodiment of the present invention.

### DESCRIPTION OF THE PREFERRED EMBODIMENTS

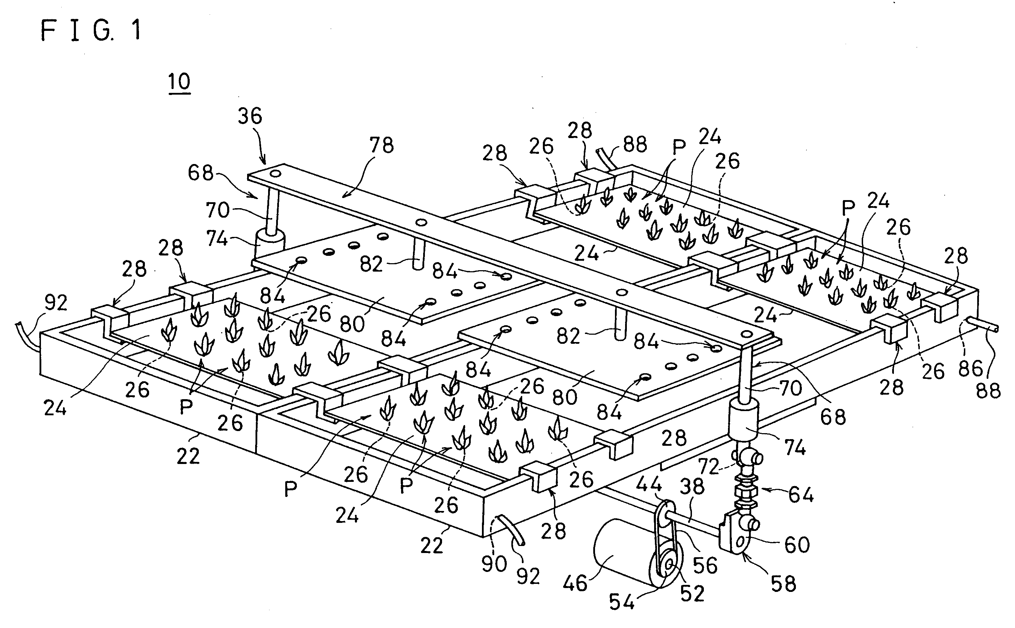

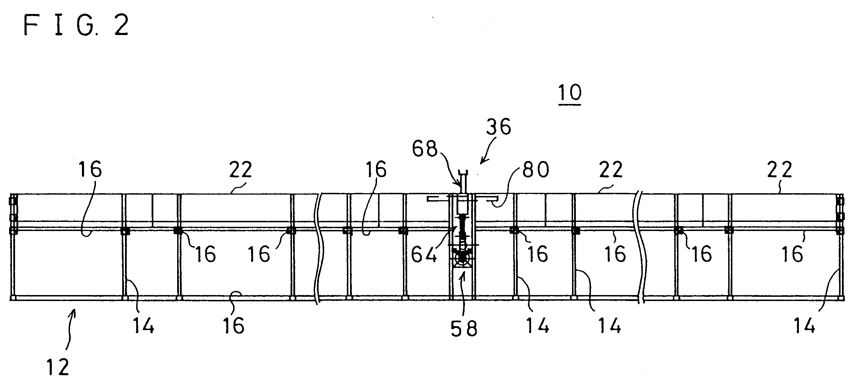

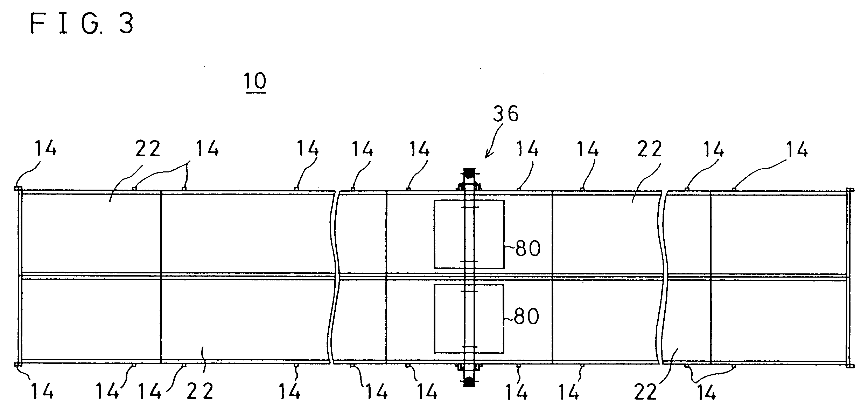

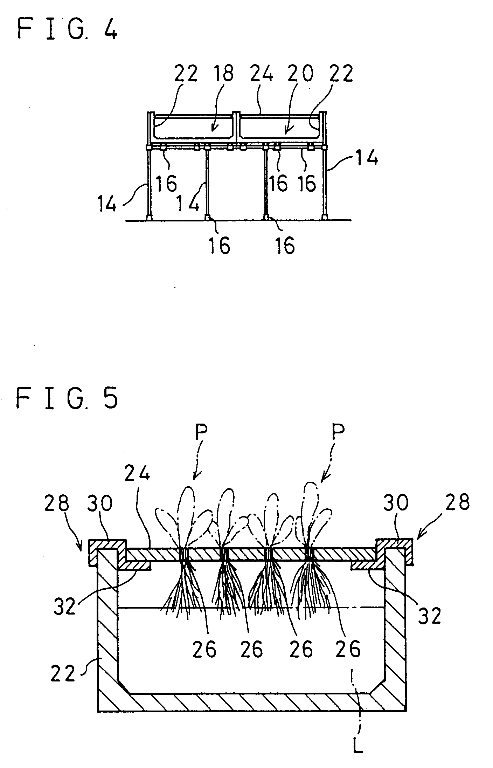

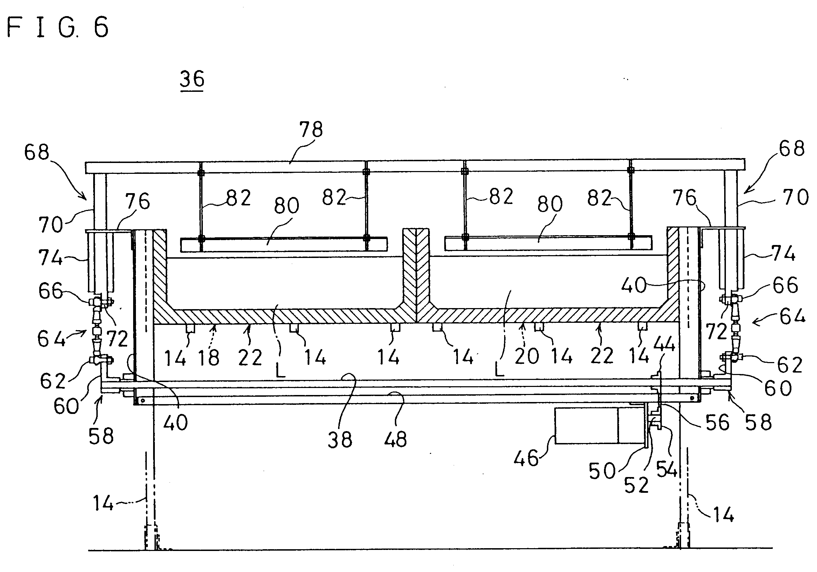

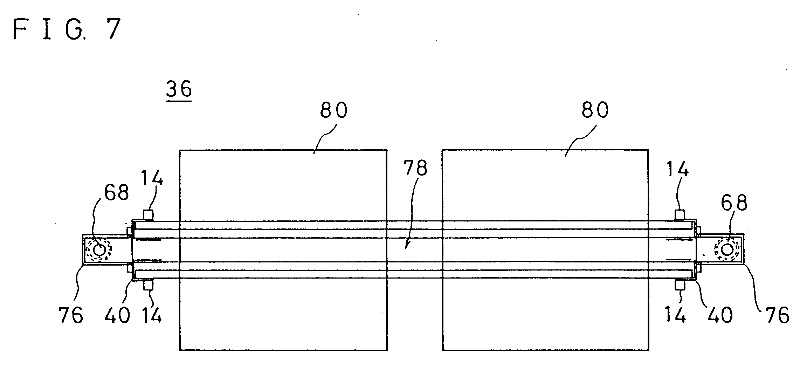

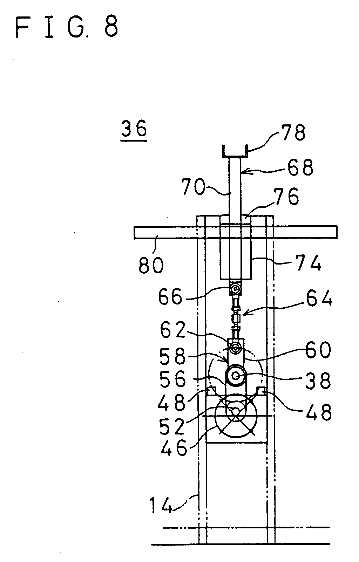

Fig. 1 is a perspective view of the essential parts showing an embodiment of the present invention, Fig. 2 is a schematic elevational view showing the whole thereof, Fig. 3 is a schematic plan view showing the same and Fig. 4 is a schematic side view showing the same. And Fig. 5 is a sectional illustrative view showing the way a planting panel is affixed. Further, Fig. 6 is a schematic elevational view of the essential parts showing the wave-making mechanism of the hydroponic apparatus of Fig. 1, Fig. 7 is a schematic plan view of its essential parts and Fig. 8 is a side view of its essential parts.

The hydroponic apparatus 10 includes a frame 12. Roughly speaking, this frame 12 is made up of a plurality of e.g. metal square pipes using proper connecting fittings (not shown).

That is, by assembling a plurality of prop members 14 and a plurality of cross pieces 16 substantially lattic ewise a frame 12 can be assembled with approximately U-sectioned placing members 18 and 20 formed thereon. In this case on the frame 12 the two placing members 18 and 20 are formed extending longitudinally and parallel to each other.

In the placing members 18 and 20 on the frame 12 a plurality of beds 22 made of a synthetic resin such as polystyrene foam are mounted two rows. These beds 22 are all formed in e.g. U-section in the same direction.

In this embodiment the length of the frame is e.g. 20 m, being 1,270 mm wide and 800 mm high.

On each bed 22 there is set a plurality of rectangular planting panel 24 made of a synthetic resin such as polystyrene foam. This planting panel 24 has formed therein a plurality of e.g. round holes 26 at proper intervals.

As shown in Fig. 5, this planting panel 24 is mounted to the top of the bed 22 removably by means of a planting panel connector 28. The planting panel connector 28 includes a fitting piece 30 substantially U-sectioned, for example, and at one end of this fitting piece 30 there is formed a rectangular supporting piece 32 extending perpendicularly from one end of the fitting piece 30. The fitting piece 30 and the supporting piece 32, made of e.g. a synthetic resin, are formed in one united body. When the planting panel 24 is mounted to the top of the bed 22, four planting panel connectors 28, for example, are fitted to one lateral end and both longitudinal ends. The planting panel 24 is thus placed on the top of the bed 22 freely removable.

In each hole 26 of the planting panel 24 inserted a cubic urethane block 34 for planting, for example, which is planted with a seedling of the plant P. The hydroponic apparatus 10 of this embodiment is good especially for green vegetables such as lettuce, spinach, Brassica Rapa var. Pervids and "chingensai"(chinese cabbage).

The hydroponic apparatus 10 of this embodiment has a wave-making part 36 at its longitudinal center. The wave-making part 36 includes a cylindrical shaft 38 made of, for example, a metal and placed along the periphery of the bed 22 at the center of the frame 12 and thereunder at proper intervals. The shaft 38 is freely to rotate.

In this case, shaft-attaching members 40, 40 are fixed to the prop members 14, 14 on both sides at the center of the frame 12 for attaching the shafts 38 freely to rotate. Each shaft-attaching member 40 is a plate of e.g. a metal formed to be in U-section and both of these members 40, 40 are fixed to the prop members 14, 14 by fixing means such as bolt and nut. These shaft-attaching members 40, 40 have arranged thereunder bearings 42 and the shaft 38 are supported freely to rotate bearings 42 and 42. The shaft 38 is provided with a pulley 44 on either side of its axis.

Further, under the shaft 38 is provided a motor 46 as driving means for freely rotating the shaft 38. In this case, under the shaft 38 there are provided, for example, two beam members 48 in parallel and at a distance from the bed's 22 longitudinal direction. As beam member 48 is used a square pipe of e.g. a metal. On one longitudinal end of two beam members 48 there are provided L-sectioned motor supporting means 50 by, for example, welding or bolt-and-nut securing means. And the motor 46 is mounted on these motor supporting means 50 using, for example, bolts and nuts. As the motor 46 in this environment is used a geared motor with an output of 60 W.

The driving gear 52 of the motor 46 is provided with a pulley 54 right under the pulley 44 connected with the shaft 38 at a given distance. And between the pulley 54 and the pulley 44 there is provided, for example, chain belt 56 as a transmitting means. The rotating force of the motor 46 is, therefore, transmitted to the shaft 38 by means of a chain belt 56.

At one axial end of the shaft 38 there is provided, for example, a crank member 58 as a means for converting the rotating force into reciprocating rectilinear motion. A crank member 58, which includes an L-sectioned crank arm 60 and to one end thereof a connecting rod 64 is supported freely to rotate. In this case the lower axial end of the connecting rod 64 is supported to a crank arm 60 freely to rotate by means of a crank pin 62. And at the upper axial end of the connecting rod 64 a working member 68 is supposed freely to rotate by means of a pin 66.

This working member 68 includes, for example, a cylindrical guide member 70 and at the lower axial end thereof there is formed, for example, tongue-like piece 72, which is formed in one united body with the guide member 70 by means of, for example, some metallic material. The upper axial end of the connecting rod 64 is supported on the tongue-like piece 72 of the working member 68 freely to rotate by means of the pin 66.

This working member 68 is held to slide vertically in a cylindrical guide post 74 of, for example, a metal. This means that a connecting frame 76 approximately U-sectioned is secured to the upper end of each of the shaft connecting members 40, 40 attached to the prop members 14, 14 on both sides of the frame 12 and at the center thereof. Inside this connecting frame 76 is held the axially central portion of the guide post 74.

The rotating force of the shaft 38 is converted into reciprocating rectilinear motion by means of the crank member 58 and the working member 68 is caused to slide vertically with the guide post 74 as guide.

Further, the working member 68 has connected thereto a supporting member 78 for supporting an undermentioned wave-making plate 80 over the bed 22 on the central of the frame 12. That is, to the axial upper ends of the two working members 68 arranged on both sides and longitudinally at the center of the frame 12, there are secured U-shape in cross section supporting members 78 of, for example, a metal by means of securing means such as bolts and nuts. Furthermore, this supporting member 78 has fitted thereto two wave-making plates 80, 80 as a wave-making element at a longitudinal distance. The two wave-making plates 80 are suspended from the supporting member 78 by securing means such as bolts and nuts.

The two wave-making plates 80 are formed square of, for example, a synthetic resin and have formed there in a plurality of round throughholes 84 as shown in Fig. 1. These throughholes 84 are for aerating culture solution stored in the bed 22 when the wave-making part 36 is actuated to cause beating its surface.

The action of the wave-making part 36 of the hydroponic apparatus 10 in this embodiment is as follows.

The pulley 54 attached to the driving shaft 52 of the motor 46 rotates when the motor 46 is driven. As the pulley 54 rotates, the pulley 44 attached to the shaft 38 is driven to rotate via the chain belt 56, while as the pulley 44 rotates, the shaft 38 is caused to rotate and crank member 58 connected thereto rotates. In this case a crank arm 60 of the crank member 58 is also caused to rotate about the shaft 38. And, as the connecting rod 64 moves vertically and linearly with crank pin 62 as pivot, the working member 64 is moved also vertically along the guide post 74. Hence, the supporting member 78 secured to the working member 68, too, is moved vertically. As the supporting member 78 moves vertically the two wave-making plates 80 attached to the supporting member 78 rotate also vertically.

Hence, with this hydroponic apparatus in this embodiment, the two wave-making plates 80 are made to beat the surface of the culture solution L in the bed 22 as described below as they are moved vertically. In this embodiment the wave-making plates 80 are so set to make, for example, one cycle vertically in 1-3 seconds. And the wave-making plate 80 has its vertical stroke set at 10-15 cm, and under the initial condition the distance between the wave-making plate 80 and the surface of the culture solution L is set to be e.g. 2-5 cm.

With the hydroponic apparatus 10 of this embodiment the culture solution L is stored in the bed 22. As the culture solution L is used in this case an aqueous solution of fertilizer salts nutrient for a given plant admixed with rhizosphere microbes effective for the plant. For that the bed 22 is provided with a feeding hole 86 for feeding the culture solution L at one longitudinal end thereof and the feeding hole 86 has connected thereto a feeding pipe 88. And to this feeding pipe 88 is fed a proper amount of the culture solution L by means of a small pump (not shown). Further, the bed 22 is provided with a drain hole 90 at the other longitudinal end thereof for draining the culture solution L. This drain hole 90 has connected thereto a drain pipe 92, for proper draining of the used culture solution L from the bed 22.

Described below is the method of culturing plants such as green vegetables by the use of this hydroponic apparatus.

First, in the bed 22 of the hydroponic apparatus 10 the culture solution L is stored to a given level. And above this bed 22 the planting panels 24 planted with seedlings of a green vegetable P such as lettuce, spinach, Brassica Rapa var. Pervidis and "chingensai"(chinese cabbage). In this case the culture solution L is stored in the bed 22 so that the tip of the roots of the seedling of the green vegetable P are soaked therein.

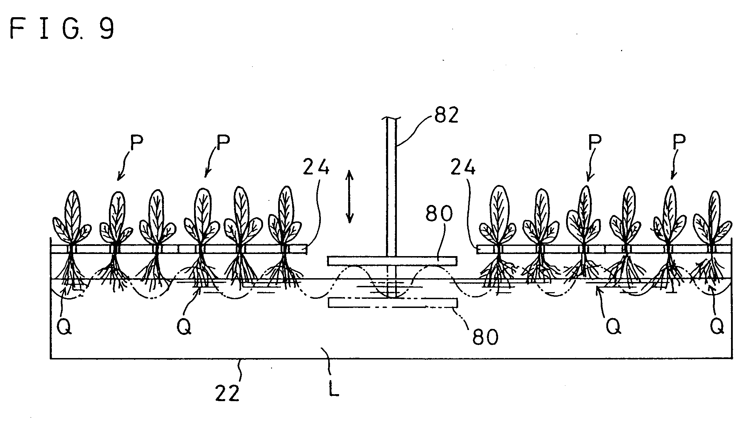

Further, with this hydroponic apparatus 10 the culture solution L in the bed 22 can be caused to wave at a given cycle through actuation of the wave-making part 36. That is, as the motor 46 is driven the shaft 38 rotates and its rotating force is converted by the crank member 58 into reciprocating rectilinear motion. The working member 68 is moved vertically thereby with simultaneous vertical movement of the wave-making plate 80 at a given cycle via the supporting member 78. Hence, the culture solution L in the bed 22 is beaten by the wave-making plate 80, this resulting in waving of the culture solution L as shown in Fig. 9.

As the culture solution L is waved, air is caused to be brought into the interface layer of the culture solution L. The oxygen in the air is then dissolved in the culture solution L, this resulting in an enriched dissolved oxygen in the interface layer. The roots (underground part) of a given green vegetable P absorbs oxygen from air, being also capable of absorbing the dissolved oxygen from the interface layer of the culture solution L, and this result in improvement of the effect of supplying oxygen to the roots. Oxygen is supplied amply to the roots of the green vegetable P and rhizosphere microbes symbiotic with the roots to facilitate survival of microbes.

Furthermore, waving of the culture solution L increases the surface area of the culture solution, this resulting in generation of a lot of heat of vaporization and preventing rise in temperature of the culture solution in the bed even in mid-summer. According to the experiments made by the inventor the rise in the temperature of the culture solution L is some 10°c lower than that with the conventional hydroponic apparatus of the circulation system. Moreover, since with this hydroponic apparatus 10 waving of the culture solution L results in swaying of the plant as a whole and natural light breeze is generated in the bed 22. Hence it is not necessary to provide air conditioning equipment such as blowers around the hydroponic apparatus 10.

Hence by the use of this hydroponic apparatus 10 it is quite easy to culture even spinach which has been considered less suited for culture in summer.

Also, by waving the surface of the culture solution L the roots of the green vegetable are swayed continuously, this improving the gas exchange between carbon dioxide and oxygen in the roots of the green vegetable P. In this case swaying of the roots causes simultaneous swaying of the green vegetable above the ground, thus gas-exchange of the green vegetable P as a whole is activated. Since the green vegetable P is swayed as a whole, photosynthesis is activated and the plant's growth is enhanced. According to the inventor's experiments, when the swaying of the green vegetable P is equivalent of 50-60 cm/s in terms of wind velocity, activation of photosynthesis is doubled and the growth rate is increased by 30%.

Since by waving the surface of the culture solution L the underground part as well as the aboveground part of the green vegetable P are swayed, the green vegetable P is less liable to damage by harmful insects such as aphides.

Further, this hydroponic apparatus 10, unlike the conventional hydroponic apparatus of the circulation type, does not require any large tank for storing the culture solution, any large and high-power pump for circulating the culture solution, any complicated apparatuses such as aerator for supplying oxygen to the culture solution and sprayer and any air conditioner such as cooler and blower for preventing rise in temperature of the culture solution in mid summer. As a result the hydroponic apparatus of the present invention is lower in both initial cost and running cost than any conventional hydroponic apparatus.

Hence, this hydroponic apparatus 10 can create environmental conditions suited for growth of plants simply and at a low cost and is also capable of preventing rise in temperature of the culture solution even in mid summer.

With the hydroponic apparatus 10 shown in Fig. 1 - Fig. 9 the wave-making part 36 is provided only one at the longitudinal center of the frame 12 but the location and the number thereof may be varied according to the length of the frame 12. That is, the wave-making part 36 may be provided either at one longitudinal end or the other longitudinal end of the frame 12, each one at the longitudinal center and one longitudinal end of the frame 12, each one at both longitudinal ends of the frame 12 and one each at the longitudinal center and both longitudinal ends of the frame 12.

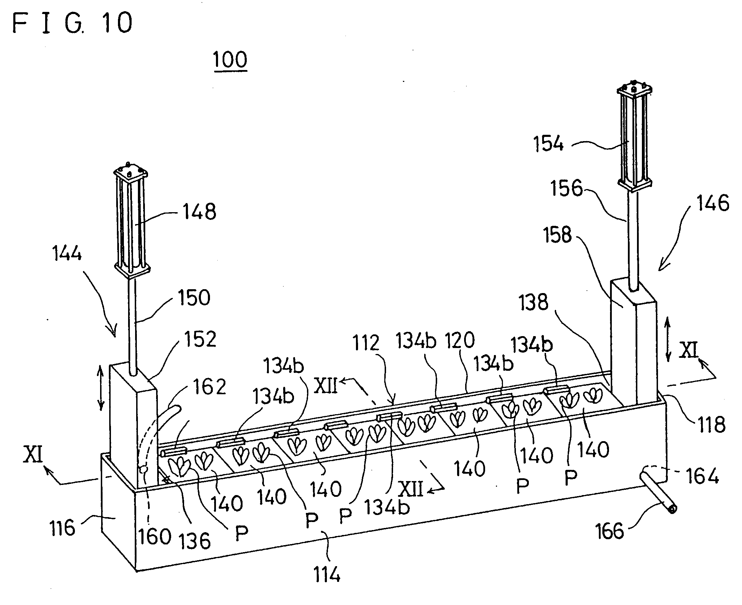

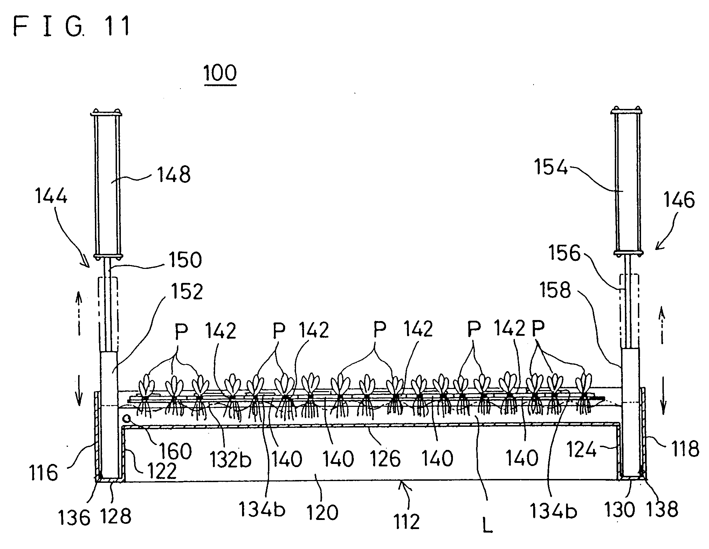

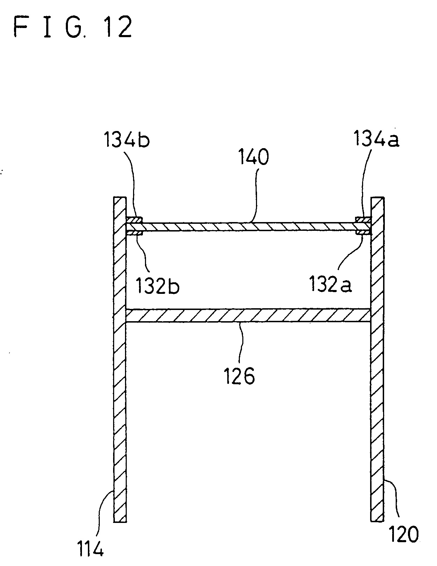

Fig. 10 is a perspective view showing another embodiment of the present invention, Fig. 11 is a sectional view taken along the line XI - XI in Fig. 10 and Fig. 12 is a sectional end view taken along the line XII - XII in Fig. 10.

A hydroponic apparatus 100 includes a bed 112. The bed 112 includes, for example, a rectangular plate-shaped front member 114 of e.g. a synthetic resin and at both longitudinal ends are formed rectangular plate-shaped first side member 116 and second side member 118 respectively.

The first side member 116 and the second side member 118 are formed extending perpendicularly from one longitudinal end and the other longitudinal end of the front member 114 in the same direction to be opposite to each other. The first side member 116 and the second side member 118 are both made of, for example, a synthetic resin, their longitudinal lengths being equal to the lateral length of the front member 114 and their lateral lengths being roughly equal to two thirds of the lateral length of the front member 114. In this case, one lateral end of the first side member 116 is bonded to the longitudinal end face of the front member 114 using, for example, an adhesive and the lateral end of the second side member 118 is likely bonded to the other longitudinal end of the front member 114. Between the first side member 116 and the second side member 118 there is formed a back member 120 of, for example, a synthetic resin. The back member 120 is formed in the same size and shape as the front member 114 and is formed between the other lateral end of the first side member 116 and the other lateral end of the second side member 118. In this case, one longitudinal end face of the back member 120 is bonded to the other lateral end of the first side member 118 using, for example, an adhesive resin and the other longitudinal end face of the back member 120 is bonded to the other lateral end of the second side member 118 also using, for example, an adhesive.

Further, between the first side member 116 and the second side member 118 there are formed, for example, a rectangular plate-shaped first partitioning member 122 and a second partitioning member 124 at a given distance. The first partitioning member 122 is formed parallel with the first side member 116 at a given distance and the second partitioning member 124 is formed parallel with the second side member 118 also at a given distance. The first partitioning member 122 and the second partitioning member 124 are made of, for example, synthetic resins. Their lateral lengths are substantially the same as the distance between the first side member 116 and the second side member 118, while their longitudinal lengths are substantially two thirds of the longitudinal lengths of the first side member 116 and the second side member 118. In this case, the first partitioning member 122 and the second partitioning member 124 have their lateral end faces bonded to the inside of the first side member 116 and the second side member 118 using, for example, an adhesive.

Between the front member 114 and the back member 120 there is formed a third partitioning member 126 made of, for example, a synthetic resin. This third partitioning member 126 is formed between the top of the first partitioning member 122 and the top of the second partitioning member 124. The third partitioning member 126 has its longitudinal length roughly equal to the distance between the first partitioning member 122 and the second partitioning member 124, and its lateral length is roughly equal to the distance between the front member 114 and the back member 120. In this case, the third partitioning member 126 has one of its longitudinal ends bonded to the topside of the first partitioning member 122 and the other longitudinal end thereof is bonded to the topside of the second partitioning member 124 using, for example, an adhesive. Simultaneously, the third partitioning member 126 has one of its lateral end faces bonded to the inside of the front member 114 and the other lateral end faces bounded to the inside of the back member 120 using, for example, an adhesive. Between the lower end of the first side member 116 and the lower end of the partitioning member 122 there is formed a rectangular plate-like first bottom member 128 made of, for example, a synthetic resin. The first bottom member 128 is formed with its longitudinal length equal to the lateral length of the first side member 116 and its lateral length roughly equal to the distance between the first side member 116 and the first partitioning 122. In this case, the first bottom member 128 has one of its longitudinal ends bonded to the lower end of the front member 114 and the other longitudinal end bonded to the lower end of the back member 120 using, for example, an adhesive. Meanwhile, one lateral end of the first bottom member 128 is bonded to the lower end of the first side member 116 and the other lateral end is bonded to the lower end of the first partitioning member 122 using, for example, an adhesive.

Similarly, the second bottom member 130 has one of its longitudinal ends bonded to the lower end of the front member 114 using, for example, an adhesive and the other longitudinal end likely bonded to the lower end of the back member 120. At the same time one of the lateral ends of the second bottom member 130 is bonded to the lower end of the second side member 118 and the other lateral end thereof is bonded to the lower end of the second partitioning member 124 using, for example, an adhesive.

Meanwhile, inside of the front member 114 and the back member 120 there are formed longitudinal supporting members 132a and 132b respectively. The supporting members 132a and 132b are bar-like and of, for example, a synthetic resin and rectangle-sectioned, their lengths being substantially the same as the longitudinal length of the third partitioning member 126. These supporting members 132a and 132b are formed at the given and same distances from the upper end of the front member 114 and the back member 120.

Further, there are formed a plurality of projecting members 134a and 134b inside top of the front member 114 and the back member 120 at lateral distances from the supporting members 132a and 132b. The projecting members 134a and 134b are formed at longitudinal distances from the front member 114 and the back member 120 confronting each other. These projecting members 134a and 134b are respectively made of, for example, a synthetic resin bar-like and rectangle-sectioned, whose length being some 1/20 of the supporting members 132a and 132b.

The two supporting members 132a, 132b and a plurality of projecting members 134a, 134b are bonded to the inside top of the front member 114 and the back member 120 using, for example, an adhesive.

Thus, by connecting the front member 114, first side member 116, second side member 118, back member 120, first partitioning member 122, second partitioning member 124, third partitioning member 126, first bottom member 128, second bottom member 130, supporting members 132a, 132b and projecting members 134a, 134b a two-layer structure bed 112 box-like with its rectangular top open is formed. This bed 112 is provided with a first solution tank-portion 136 and a second solution tank-portion 138, both substantially U-sectioned, at both longitudinal ends thereof.

The bed 112 may as well be formed in one united body by, for example, injection-molding the aforementioned members together. Although the aforementioned members are made of some synthetic resin but these as well be made by foam molding, and their materials are not limited to synthetic resins and may as well be made by foam molding, may be made of wood finished by water-proofing and may also be made of other materials such as aluminum alloy and stainless steel.

Over the bed 112 there are placed a plurality of planting panels 140, which are held between the topside of the supporting members 132a and 132b and the underside of the mating projecting members 134a and 134b. The planting panel 140 is made of polystyrene foam and rectangle-shaped. This planting panel 140 has formed therein two holes (not shown) at a given distance and each of these holes is set with a, for example, cubic urethane block 142 for planting. This planting urethane block 142 is planted with seedlings of plant P such as lettuce, spinach, honewort and "kaiware"(white radish sprouts).

The hydroponic apparatus 100 in this embodiment is provided with wave makers 144 and 146 as a wave-making part. These wave makers 144 and 146 comprise piston cylinder 148 and 154 and wave-making elements 152 and 158 which are moved vertically and intermittently at a given cycle by the piston cylinders 148 and 154.

In this case, one of the piston cylinders 148 is located above one longitudinal end of the bed 112 and the other piston cylinder 154 is located above the other longitudinal end of the bed 112. The piston cylinders 148 and 154 are fixed securely to the frame (not shown) provided above the bed 112 by means of proper securing parts (not shown). The tip of the rod 150 of the piston cylinder 148 and that of the rod 156 of the piston cylinder 154 have secured thereto the wave-making elements 152 and 158 which are, for example, rectangular parallelepiped. The wave-making elements 152 and 158 are, for example, made of some corrosive resistant material such as a synthetic resin.

In these wave makers 144 and 146, the wave-making elements 152 and 158 can get in and out of the first solution tank-portion 136 and the second solution tank-portion 138 above the bed 112 through vertical reciprocating motion of the piston cylinders 148 or 154.

The hydroponic apparatus 100 in this embodiment is so arranged that the culture solution L made by dissolving fertilizer salts et cetera in water is fed into the bed 112 and stored there. In this case, a feeding hole 160 for feeding of the culture solution L is provided at one longitudinal end of the back member 120 and a feeding pipe 162 is connected thereto. There is provided a small pump (not sown) et cetera and the culture solution L is fed as necessary to this feeding pipe 162. Further, the bed 112 is provided with a drain hole 164 at the other end of the longitudinal direction of the front member 114 for draining the culture solution L. This drain hole 164 has connected thereto a drain pipe 166 for proper draining of the culture solution L in the bed 112.

With this hydroponic apparatus 100 the amount of the culture solution L stored in the bed 112 is so controlled that the roots Q of the plant P are not soaked therein. And with this hydroponic apparatus 100 the amount of the culture solution L stored in the bed 112 is controlled properly with arrangement that the roots Q of the plant P are not soaked therein when the wave-making elements 152 and 158 are inserted into the first and second solution tank - portion 136 and 138, this being likely to be caused by waving phenomenon of the culture solution L in the bed 112.

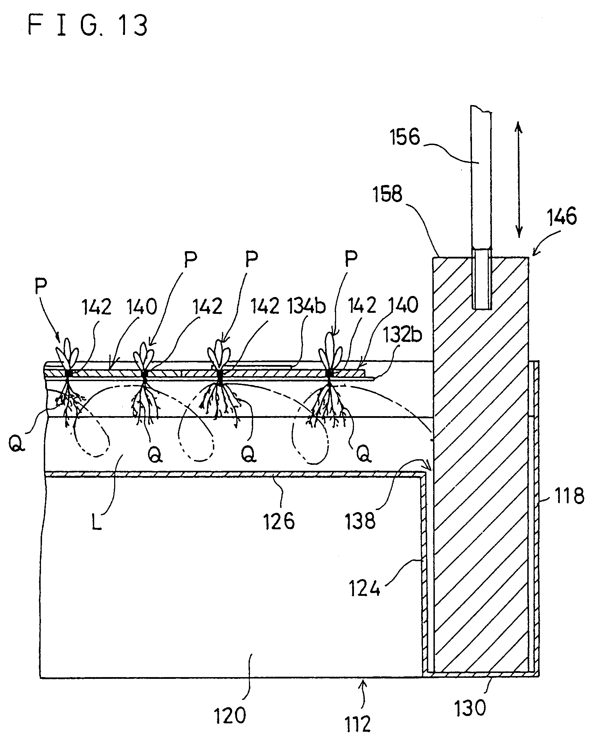

Further, with this hydroponic apparatus 100, the wave makers 144 and 146 are intermittently and alternately as shown in Figs. 11 and 13. When the wave-making elements 152 and 158 are inserted into the first solution tank-portion 136 and the second solution tank-portion 138, waving phenomenon is likely to occur with the culture solution L stored in the bed 112 giving rise to waving phenomenon, this resulting in soaking of the roots Q of the plant P in the culture solution L. That is, when the piston cylinders 148 and 154 are driven, the rods 150 and 156 come down with resultant insertion of the wave-making elements 152 and 158 into the first solution tank-portion 136 and the second solution tank-portion 138. Then the culture solution L flows in the bed 112 waving and this results in soaking of the roots Q of the plant P. The waving in the bed 112 is further intensified since, in this hydroponic apparatus 100, the wave makers 144 and 146 are driven alternately.

In this hydroponic apparatus 100, air is brought into the interface layer of the culture solution L by intermittent waving up in the bed 112 by means of the wave makers 144 and 146. This results in dissolving of oxygen in the air and enriched dissolved oxygen in the interface layer. Hence, the roots Q of the plant P can absorb oxygen from the air, at the same time absorbing oxygen dissolved in the culture solution L whose content is high in the interface layer. By increasing the amount of the culture solution L stored in the bed 112 the fluid flow in the bed 112 is enhanced without increasing the wave maker's capacity, and the oxygen supply effect to the plant's roots can be improved.

During waving, the gas exchange between carbon dioxide and oxygen in the roots Q of the plant P is improved for the plant's roots Q are continually swayed thereby.

Further, during waving water and nutrients in the culture solution L is uniformed.

Further, since the plant P's roots Q can absorb the culture solution uniformed with a large amount of oxygen, the microbe symbiotic with the plant P, too, are accelerated, this further enhancing growth of the plant P.

Hence, with this hydroponic apparatus 100 waving phenomenon can simply made by means of the wave makers 144 and 146 and it is, therefore, possible to create optimum natural environments for the plants as well as the microbes playing an important role for the growth of the plants.

Further, with this hydroponic apparatus 100, it is possible to simply make waves in the bed 112 by vertical displacement of the wave-making elements and it can be easily make adjustment of the water level for the culture solution L in the bed 112. Hence with this hydroponic apparatus 100 since it is not necessary to use a large tank and pump for circulation of the culture solution and without the need of complicated apparatuses for level adjustment of the culture solution the running cost is substantially lower than with any conventional hydroponic apparatus.

Also with this hydroponic apparatus 100 it is possible to have wave-making elements 152 and 158 inserted into the first solution tank-portion 136 and the second solution tank-portion 138 and use the culture solution L overflowing from the first solution tank-portion 136 and the second solution tank-portion 138 in the bed 112, measuring the capacities of the first and the second solution tank-portions 136 and 138 to see the required volume of the culture solution L.

With this hydroponic apparatus 100, the amount of the culture solution L required for soaking and swaying of the roots Q of the plant P can be secured by inserting the wave-making elements 152 and 158 into the first solution tank-portion 136 and the second solution tank-portion 138 and let the culture solution L flows out of these tank-portions 136 and 138, which is enough for soaking and swaying the roots Q. It is, therefore, possible to determine the volumes of the first and second solution tank-portions 136 and 138 and fill the culture solution L only in the first and second solution tank-portions 136 and 138.

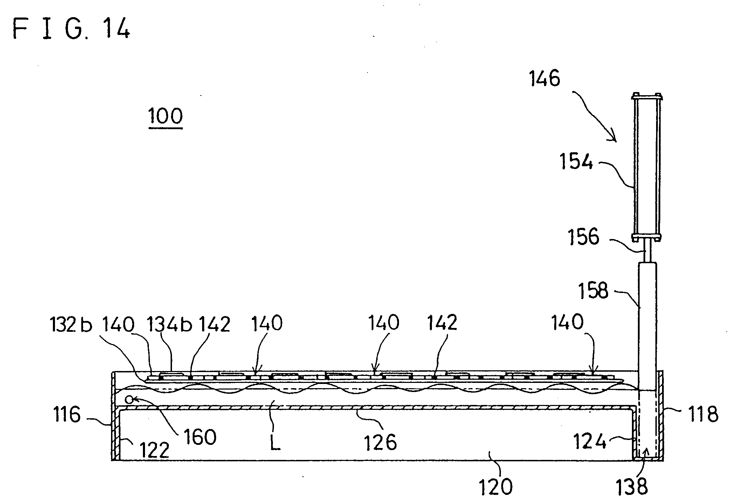

Fig. 14 is an illustrative view showing a variation of the hydroponic apparatus shown in Fig. 10, Fig. 11, Fig. 12 and Fig. 13. Unlike the embodiment shown in Fig. 10 -Fig. 13, the hydroponic apparatus 100 of this variation is not provided with, among others, either of the wave maker 144. Also, the first partitioning member 122 is formed in contact with the inside of the first side member 116 and there is no gap between it and the first side member 116. Hence, with the hydroponic apparatus 100 of Fig. 14 the first solution tank-portion 136 is missing. In the hydroponic apparatus 100 shown in Fig. 14 the solution tank-portion 138 is formed only at one longitudinal and of the bed 112 and the solution tank-portion 138 are provided with the wave-maker 146 above it. Above this solution tank-portion 138 there is provided the wave maker 146. This wave-maker 146, like that of the hydroponic apparatus shown in Figs. 10-13, the wave-making element 158 at the tip of the rod 156 can move vertically and reciprocally in the solution tank-portion 138. When the wave-making element 158 is inserted into the solution tank-portion 138, it is possible to create waving phenomenon in the bed 112.

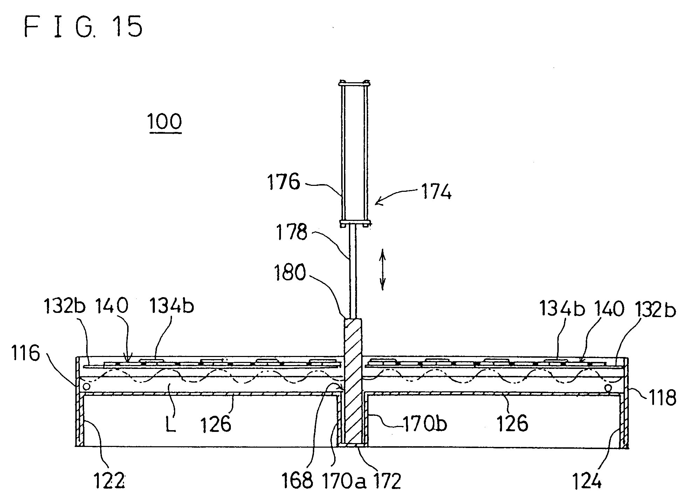

Fig. 15 is an illustrative view showing another variation of the hydroponic apparatus shown in Figs. 10-13. Unlike the embodiment shown in Figs. 10-13 this variation of the hydroponic apparatus 100 is provided with no wave makers on both longitudinal end of the bed 112. Also, the first partitioning member 122 is formed in close contact with the inside of the first side member 116 with no distance therefrom, hence the first solution tank-portion 136 is not formed. Further, the second partitioning member 124 is formed in close contact with the inside of the second side member 118 with no distance therefrom, hence the second solution tank-portion 138 is not formed, either. With this hydroponic apparatus 100, another solution tank-portion 168 is formed roughly at the center of the longitudinal length of the bed 112.

In this case, two partitioning members 170a and 170b roughly at the center of the bed 112 at a longitudinal distance. These partitioning members 170a and 170b are formed in the same shape and the same size as the first partitioning member 122 and the second partitioning member 124 and their lower ends are connected by another bottom member 172. This bottom member 172 is made of, for example, a synthetic resin and is in the same shape and the same size as the first bottom member 128 and the second bottom member 130.

In the hydroponic apparatus 100 shown in Fig. 15, therefore, another solution tank-portion 168 is formed at the longitudinal center of the bed 112 and above this solution tank-portion 168 there is provided a wave maker 174. As in the hydroponic apparatus 100 shown in Figs. 10-13 this wave maker 174 is so designed when it is driven, a wave-making element 180 connected to the tip of a rod 178 can make reciprocation vertically. When the wave-making element 180 is inserted into the solution tank-portion 168, it is possible to cause waving phenomenon in the bed 112.

Even with the hydroponic apparatus 100 shown in Fig. 14 and Fig. 15 it is possible to cause waving phenomenon in the bed by means of the wave maker as with those shown in Figs. 10-13, hence optimum environment for plant growth is attainable like those shown in Figs. 10-13.

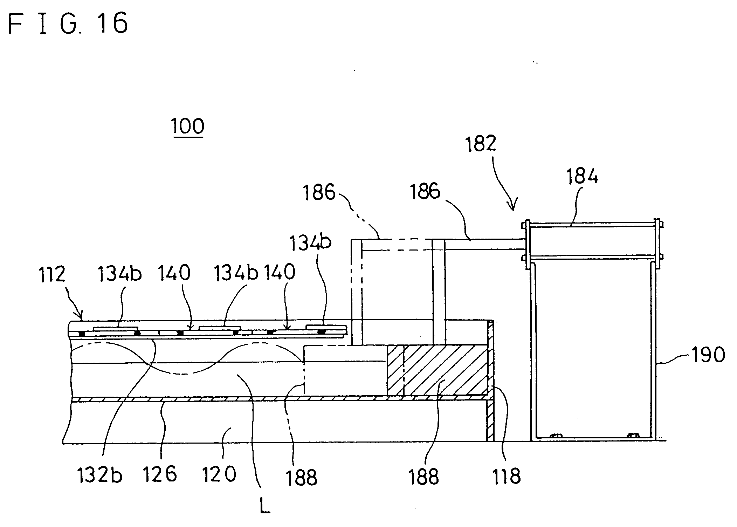

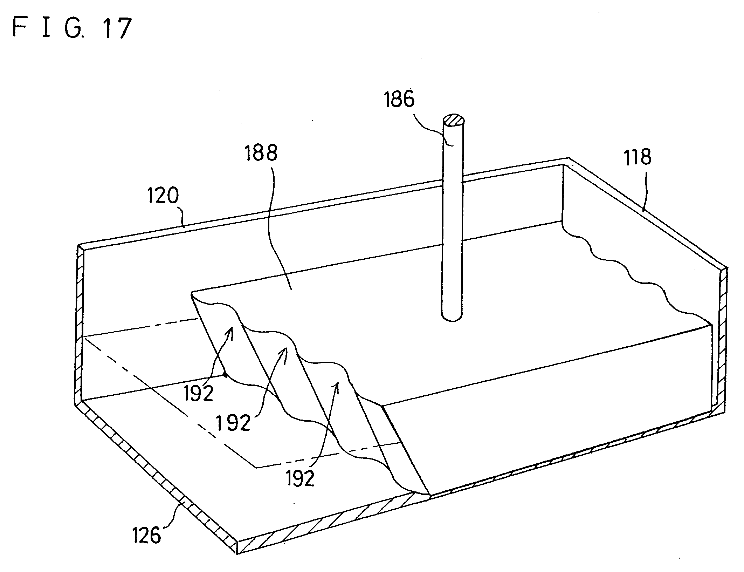

Fig. 16 is an illustrative view showing the essential parts of another embodiment of the present invention. The hydroponic apparatus 100 of this embodiment is different from that shown in Figs. 10-13 especially in that the wave-making element is displaceable in the longitudinal direction of the bed 112. This hydroponic apparatus 100 does not include the first solution tank-portion 136 and the second solution tank-portion 138. With the hydroponic apparatus 100 shown in Fig. 16 the piston cylinder 184 of the wave maker 182 is mounted on an e.g. U-sectioned cylinder support 190 off the bed 112. Further, the rod 186 of the piston cylinder 184 is, for example, L-shaped and at the tip thereof a wave-making element 188 substantially rectangular parallelepiped-shaped made of, for example, a synthetic resin is used. When the wave maker element 182 is driven, the wave-making element 188 connected to the tip of the rod 186 reciprocates sideways at one longitudinal end of the third partitioning plate 126. When the wave-making element 188 has been displaced from inside of the second side member 118 along the longitudinal direction of the bed 112 to the first side member 116, the culture solution L in the bed 112 flows to cause waving phenomenon. The wave-making element 188 has, as especially shown in Fig. 17, one longitudinal end face and the other longitudinal end face forming a plurality of recesses 192, 192....192 substantially semi-circular in section, for example. These recesses 192 are formed to increase the surface area of the wave-making 188 element, which causes a still more effective waving phenomenon in the bed 112.

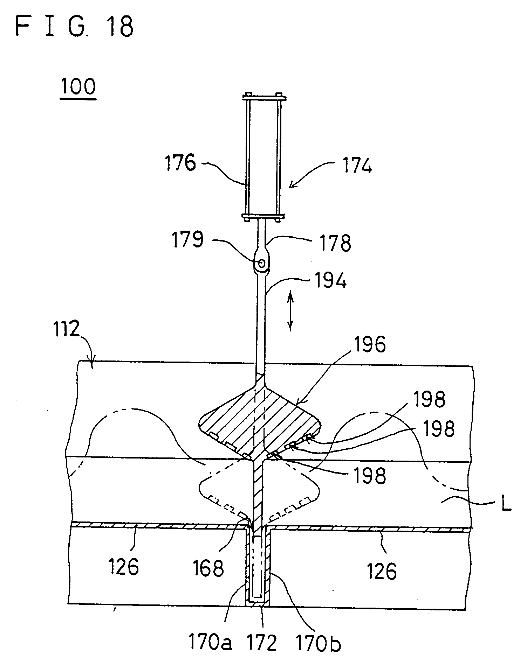

Fig. 18 is an illustrative view of the essential parts showing a variation of the hydroponic apparatus shown in Fig. 15. This hydroponic apparatus 100 is particularly different form that shown in Fig. 15. That is, while in the wave maker 174 of Fig. 18 the tip of its rod 178 is connected with another rod 194 with a pin 179 and in the axial mid point of the rod 194 a wave-making element 196 substantially rhombus-sectioned and made of, for example, a synthetic resin is formed. In the lower two sides end portion of this rhombic wave-making element 196 there are formed a plurality of, for example, rectangle-sectioned slits 198, 198. With this hydroponic apparatus 100, as with that shown in Fig. 15, waves can be made in the bed 112 and waving phenomenon can be caused. In this case, since with the hydroponic apparatus 100 shown in Fig. 18 a plurality of the slits 198 are made in the wave-making element 196, bubbles can be formed together with waves, when the rod 194 is inserted into the culture solution L in the bed 112, this enabling further increasing the amount of dissolved oxygen in the culture solution L.

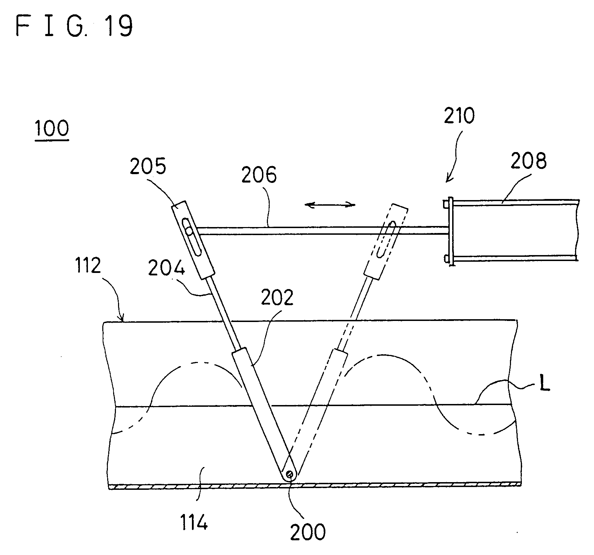

Fig. 19 is an illustrative view of the essential parts showing still a further embodiment of the present invention. This hydroponic apparatus 100 is different from the aforementioned embodiments especially in the wave-making mechanism. That is, with the hydroponic apparatus 100 shown in Fig. 19 a pivot-portion 200 round-sectioned, for example, is formed freely rotatable about the longitudinal center of the bed 112 and between the front member 114 and the back member 120. This pivot-portion 200 rotatively connects rectangle-shaped wave-making plate 202 of, for example, a synthetic resin. The wave-making plate 202 have supporting rods 204 along their longitudinal direction and the supporting rods 204 are connected with a piston rod 206 of the wave-maker 210 freely to rotate via connectors 205.

This wave-maker 210 includes a piston cylinder 208, which is secured to a frame (not shown) provided above the bed 112's longitudinal center with, for example, brackets. In the hydroponic apparatus 100 shown in Fig. 19, as the piston cylinder 208 is driven, its rod 206 moves reciprocally along the longitudinal of the bed 112. Further, the supporting rod 204 connected to the tip of the rod 206 is swung in the bed 112 with the wave-making plate 202 with the pivot portion 200 as fulcrum. Hence, with this hydroponic apparatus 100 waves can be made by the wave-making plate 202 from the center of the bed 112 to both longitudinal sides.

With the hydroponic apparatus 100 of Figs. 10-19, the wave height and the wave length of the waves generated in the bed 112 by each wave maker are proportional to the stroke and the period of each piston cylinder. In this case, it is possible to bring the extent of generation of the particle motion of the culture solution L under the interface of the culture solution L in the bed 112 to a deeper level with increasing wave height and wave length.

For improving the wave-making effect of each wave maker, it is particularly recommended to impart a grade to the third partitioning member 126 of the bed 112 and when grading is made, it is possible to narrow the width of its passage from the upstream to the downstream.

Further, in the bed 112, slanted anti-water-repelling plates may be properly arranged around each wave-making element to prevent water-repelling caused by displacement thereof.

Although the present invention has been described and illustrated in detail, it is only for illustration and description of embodiments and it is apparent that they are not to be understood as limitation, and the spirit and scope of the invention are limited only by wording of the appended claim.

## Claims

1. A hydroponic apparatus comprising a bed and planting panels mounted above said bed for holding what have been planted with seedlings of a kind of plant so that the tip of the roots of said plant are soaked in culture solution stored in said bed and a wave-making part for making waves in said bed through waving of said culture solution in said bed.

2. A hydroponic apparatus according to claim 1, wherein said wave-making part comprises a wave-making element formed above said bed and a means for vertically displacing said wave-making element.

3. A hydroponic apparatus according to claim 2, wherein said wave-making part is formed at the center portion of said bed.

4. A hydroponic apparatus according to claim 2, wherein said wave-making part is formed at one end of said bed.

5. A hydroponic apparatus according to claim 2, wherein said wave-making part are formed at the center portion and one end of said bed.

6. A hydroponic apparatus according to claim 2, wherein said wave-making part are formed at the center portion and both ends of said bed.

7. A hydroponic apparatus according to claim 2, wherein said wave-making part comprises:
shaft disposed at the periphery of said bed and freely rotatable;
a driving means for rotating said shaft;
a converting means connected with said shaft and converting the rotating force of said shaft into reciprocating rectilinear motion;
a working member displaceable vertically by said converting means;
a supporting member disposed above said bed with end of said supporting member connected with said working member; and
wave-making plate attached to said supporting member and disposed at a distance from the surface of said culture solution in said bed;
and is characterized in that the surface of said culture solution in said bed is beaten for waving of said culture solution by vertically displacing said wave-making plate at a given cycle through driving of said driving means.

8. A hydroponic apparatus according to claim 7, wherein said converting means is a crank member.

9. A hydroponic apparatus according to claims 7 and 8, wherein said wave-making plate has a plurality of throughholes.

10. A hydroponic apparatus according to claim 1, wherein said bed is formed as a box-like with top of said bed is opened, said wave-making part includes a wave-making element disposed on one longitudinal end of said bed and causes said culture solution in said bed to wave by displacing said wave-making element along the longitudinal direction of said bed to thereby wave said culture solution in said bed.

11. A hydroponic apparatus according to claim 10, wherein a plurality of recesses are formed in the end face of said wave-making element.

12. A hydroponic apparatus according to claim 1, wherein said wave-making part includes a wave-making plate located at the center portion of said bed to be freely movable and said culture solution in said bed is waved by swinging said wave-making plate.
